# EUROPEAN PATENT SPECIFICATION

(11) **EP 2 684 688 B1**
(45) Date of publication and mention of the grant of the patent: **15.03.2017**
(21) Application number: 12176329.6
(22) Date of filing: 13.07.2012
(51) Int. Cl.: B32B 15/08, B32B 15/18

(54) **PROCESS FOR MANUFACTURING A POLYMER-COATED SUBSTRATE FOR PACKAGING APPLICATIONS AND A POLYMER-COATED SUBSTRATE PRODUCED THEREBY**
VERFAHREN ZUR HERSTELLUNG EINES POLYMERBESCHICHTETEN SUBSTRATS FÜR VERPACKUNGSANWENDUNGEN UND DAMIT HERGESTELLTES POLYMERBESCHICHTETES SUBSTRAT
PROCÉDÉ DE FABRICATION D'UN SUBSTRAT REVÊTU D'UN POLYMÈRE POUR APPLICATIONS D'EMBALLAGE ET SUBSTRAT REVÊTU D'UN POLYMÈRE AINSI OBTENU

(43) Date of publication of application: 15.01.2014
(73) Proprietor: Tata Steel IJmuiden BV, NL-1951 JZ VELSEN-NOORD (NL)
(72) Inventor: Penning, Jan Paul, 1970 CA IJMUIDEN (NL)
(74) Representative: Bodin, Andre

(56) References cited:
- WO-A1-94/23858

## Description

This invention relates to a process for manufacturing a polymer-coated substrate for packaging applications and to said polymer-coated substrate.

Tin mill products include tinplate, usually as electrolytic tinplate, Electrolytic Chromium Coated Steel (ECCS, also referred to as tin free steel or TFS), and blackplate, the uncoated steel. Packaging steels are increasingly being used in the form of tinplate or ECCS onto which an organic coating is applied. In case of tinplate this organic coating is usually a lacquer whereas in case of ECCS increasingly thermoplastic polymer coatings such as poly(ethylene terephthalate) (PET) or polypropylene (PP) coatings are used, such as in the case of Protact^{®}.

Packaging steel is provided as single- or double-reduced tin mill products generally in thicknesses of between 0.13 and 0.49 mm. A Single-Reduced (SR) tin mill product is cold-rolled directly to the finished gauge and then recrystallisation-annealed, either by batch (BA) or continuous (CA) recrystallisation annealing, and finally temper rolled . This temper rolling is intended to correct any shape defects, to introduce a certain surface texture or roughness and to prevent discontinuous yielding upon forming the substrate into a product by e.g. deep-drawing. The temper rolling eliminates yield point elongation from the tensile curve. A Double-Reduced (DR) tin mill product is given a first cold reduction to reach an intermediate gauge, recrystallisation-annealed and then given a second cold reduction to the final gauge. The resulting DR product is stiffer, harder, and stronger than SR, allowing customers to utilise lighter gauge steel in their application. These uncoated, cold-rolled, recrystallisation-annealed and optionally temper-rolled SR and DR packaging steels are referred to as blackplate. The first and second cold reduction may be given in the form of a cold-rolling reduction in a cold-rolling tandem mill usually comprising a plurality of (usually 4 or 5) rolling stands.

After annealing the SR substrate and temper rolling or second cold reduction of the DR substrate, the substrate is coated with the relevant metallic coating layer to produce tinplate or ECCS before being coated with a polymer coating.

After coating the SR or DR substrate with the metallic coating, the substrate has certain mechanical properties. These mechanical properties may change with the passing of time, and may change more quickly if the temperature is above ambient temperature. Such elevated temperatures are for instance encountered when coating the substrate with a thermoplastic polymer coating. Coating the substrate with a thermoplastic polymer coating typically involves the steps of pre-heating the substrate, applying the polymer coating, and optionally post-heating the polymer-coated substrate and subsequently cooling the polymer-coated substrate. The temperatures to be employed in the pre-heating and post-heating steps will depend on the nature and thermal properties of the thermoplastic polymer(s) comprising the coating, but are in most cases in excess of 200°C. Accelerated ageing taking place at these elevated temperatures causes the yield point elongation to return. Upon forming these aged substrates into a packaging application, Lüders' lines may develop. Lüders' lines are elongated surface markings or depressions, often visible with the unaided eye, that form along the length of a specimen at an angle of approximately 45° to the loading axis. Caused by localized plastic deformation, they result from discontinuous (inhomogeneous) yielding. These Lüders' lines are aesthetically unattractive and have to be avoided on finished products

WO94/23858 discloses a process for producing polymer-coated steel substrates comprising a metal based coating and a polymeric coating. These polymer-coated steel substrates are subjected to a second cold rolling step at a reduction of 20 to 35% to produce a double reduced substrate.

It is an object of the invention to provide a polymer-coated SR or DR substrate that is substantially free from yield point elongation.

It is also an object of the invention to provide a polymer-coated SR or DR substrate in which the polymer coating has an improved environmental stress cracking resistance.

One or both of these objects are reached by a process for manufacturing a polymer-coated steel substrate for packaging applications with improved environmental stress cracking resistance, comprising the subsequent steps of:
- producing a polymer-coated substrate with a polymer coating layer on one or both sides of said substrate;
- subjecting the polymer-coated substrate to a stretching operation wherein the stretching operation is achieved by:
   a. passing the material through a temper mill and applying a thickness reduction between 0 - 3%, preferably of at least 0.2%; or by
   b. passing the material through a stretcher-leveller.

With "subsequent" an order in time is meant. It does not necessarily mean that the process steps follow immediately after one another. Preferred embodiments are provided in the dependent claims.

The hot-rolled steel is cold-rolled to produce: i) a single-reduced (SR) steel substrate, or ii) a double-reduced (DR) steel substrate which was subjected to recrystallisation annealing between the first and second cold-rolling step. The SR and temper-rolled steel substrate may have undergone a recrystallisation annealing. Substrates are called full-hard substrates if the SR-substrate has not undergone a recrystallisation annealing after cold-rolling step.

In order to achieve intimate bonding between a thermoplastic polymer and a metallic substrate it is necessary to utilise elevated temperatures and/or heat treatments such as the aforementioned pre-heating of the substrate and the optional post-heating of the polymer-coated substrate. These heat treatments can negatively impact the bulk mechanical properties of the steel substrate, due to ageing effects. It was found possible to improve the bulk mechanical properties of the polymer-coated steel substrate after said heat treatment by stretching the polymer-coated steel substrate to a small extent (i.e. between 0 - 3%, preferably at least 0.2%, more preferably at least 0.5%) through e.g. temper rolling or passing the material through a stretcher-leveller. Such a treatment not only serves to improve the bulk mechanical properties (e.g. eliminate/reduce yield point elongation, improve the Rm/Rp ratio, etc.), but can also be used to improve the strip shape (e.g. to reduce the level of bow). Furthermore such a material conditioning process can also potentially be used to modify the surface structure. The substrate is not subjected to extensive reductions during the stretching.

The inventors found that the development of stress cracking in polymer-coated steel substrates for packaging applications is directly related to the mechanical behaviour of the substrate. There is a strong correlation between the occurrence of stress cracking and the areas where the substrate shows inhomogeneous, localised deformation due to discontinuous yield phenomena (Lüders' lines). By temper rolling or stretcher-levelling the polymer-coated substrate these discontinuous yield phenomena are suppressed. The inventors surprisingly found that, contrary to the normal processes, the substrate can be temper rolled or stretcher-levelled while the substrate is already coated with the polymer coating whereas normally the substrate is temper rolled or stretcher-levelled before the polymer coating is applied to the substrate. The process according to the invention eliminates the risk of the discontinuous yield phenomena returning or occurring as a result of the heat treatment of the substrate needed to adhere the polymer coating to the substrate. The stretching operation has no deleterious effects on the polymer coating itself, nor on the adhesion thereof to the (un)coated substrate. No cracking or damage occurs. For instance, film lamination of a PET film requires the substrate to be pre-heated to temperatures exceeding 220°C and/or post-heated after coating. In a cast film lamination process the molten polymer is cast onto the substrate, which may have been pre-heated. The melting temperature of PET is about 250°C, depending on the type of PET. For coatings based on a different polymer the above-mentioned temperatures differ as well. The process according to the invention also eliminates the risk of the discontinuous yield phenomena returning or occurring as a result of the heat treatment of the substrate during reflowing of the tin layer or diffusion annealing of the metallic coating and the substrate prior to applying the polymer coating.

In the process according to the invention a steel slab or strip suitable for producing a low-carbon, an extra-low-carbon or an ultra-low-carbon hot-rolled strip for producing packaging steel by hot-rolling at a finishing temperature higher than or equal to the Ar₃ transformation point is provided. The impact of the heat treatment before (preheat), during or after (post-heat) the application of the polymer coating on the mechanical properties of the bulk steel substrate varies with steel composition, e.g. carbon content of the steel, and mechanical processing history of the material, e.g. amount of cold-rolling reduction, batch or continuous annealing. In case of low carbon steels (which ranges to up to about 0.15 wt.% C, but for packaging purposes is normally up to about 0.05 wt.%) or extra low carbon steels (typically up to about 0.02 wt.% C) the yield and ultimate strength can be affected, as a result of carbon going into solution. Also, a varying amount of yield point elongation is observed after this heat treatment, for CA and BA carbon steel grades.

In an embodiment the thermoplastic polymer coating is a polymer coating system comprising one or more layers comprising the use of thermoplastic resins such as polyesters or polyolefins, but can also include acrylic resins, polyamides, polyvinyl chloride, fluorocarbon resins, polycarbonates, styrene type resins, ABS resins, chlorinated polyethers, ionomers, urethane resins and functionalised polymers, and/or copolymers thereof and/or blends thereof. For clarification:
- Polyester is a polymer composed of dicarboxylic acid and glycol. Examples of suitable dicarboxylic acids include therephthalic acid, isophthalic acid, naphthalene dicarboxylic acid and cyclohexane dicarboxylic acid. Examples of suitable glycols include ethylene glycol, propane diol, butane diol, hexane diol, cyclohexane diol, cyclohexane dimethanol, neopentyl glycol etc. More than two kinds of dicarboxylic acid or glycol may be used together.
- Polyolefins include for example polymers or copolymers of ethylene, propylene, 1-butene, 1-pentene, 1-hexene or 1-octene.
- Acrylic resins include for example polymers or copolymers of acrylic acid, methacrylic acid, acrylic acid ester, methacrylic acid ester or acrylamide.
- Polyamide resins include for example so-called Nylon 6, Nylon 66, Nylon 46, Nylon 610 and Nylon 11.
- Polyvinyl chloride includes homopolymers and copolymers, for example with ethylene or vinyl acetate.
- Fluorocarbon resins include for example tetrafluorinated polyethylene, trifluorinated monochlorinated polyethylene, hexafluorinated ethylene-propylene resin, polyvinyl fluoride and polyvinylidene fluoride.
- Functionalised polymers for instance by maleic anhydride grafting, include for example modified polyethylenes, modified polypropylenes, modified ethylene acrylate copolymers and modified ethylene vinyl acetates.

Mixtures of two or more resins can be used. Further, the resin may be mixed with anti-oxidant, heat stabiliser, UV absorbent, plasticiser, pigment, nucleating agent, antistatic agent, release agent, anti-blocking agent, etc. The use of such thermoplastic polymer coating systems have shown to provide excellent performance in can-making and use of the can, such as shelf-life.

In an embodiment the substrate consists of tinplate, blackplate or ECCS.

Steel substrates may be provided with a metallic coating such as tin (tinplate), chromium (ECCS) or other metals such as nickel, or may be uncoated (blackplate). These (un)coated substrates may be subjected to a heat treatment for instance for reflowing the tin, for allowing the tin to diffuse into the substrate and form various types of FeSn-alloys or later in the production process as a result of the application of the polymer coating.

In addition to the metallic coating, chemical treatments, such as passivation treatments or the application of chemical conversion coatings may be applied to the (un)coated steel substrate in order to i) provide corrosion protection and ii) to improve the adhesion of the subsequently applied organic or polymer coating to the substrate. For tinplate, the well-known '300' or '311' passivation treatments with hexavalent chromium solutions may be employed. Also, other chemical treatments which exclude the use of hexavalent chromium may be utilised, for instance treatments with solutions containing trivalent chromium species or solutions entirely free of chromium. The invention works with all these treatments because the stretching operation has an effect on the steel substrate, but does not significantly affect the metallic coating, the passivation or conversion coating or the polymer coating. Hexavalent chromium is nowadays considered a hazardous substance that is potentially harmful to the environment and constitutes a risk in terms of worker safety. There is therefore an incentive to develop alternative metal coatings that are able to replace conventional tinplate and ECCS, without the need to resort to the use of hexavalent chromium during manufacturing and minimising, or even eliminating, the use of tin for economical reasons. The inventors found that it is particularly advantageous to produce the Cr-CrOx coating layer by depositing the Cr-CrOx-layer in one plating step from a plating solution comprising a mixture of a trivalent chromium compound, a chelating agent, an optional conductivity enhancing salt, an optional depolarizer, an optional surfactant and to which an acid or base can be added to adjust the pH as described in co-pending EP12162415.9 which is herein incorporated by reference. The inventors found that a trivalent chromium plating solution wherein the chelating agent comprises a formic acid anion, the conductivity enhancing salt contains an alkali metal cation and the depolarizer comprises a bromide containing salt, preferably wherein the cationic species in the chelating agent, the conductivity enhancing salt and the depolarizer is potassium, is particularly effective in applying a Cr-CrOx layer in one process step.

It was found that a Cr-CrOx coating produced from a trivalent chromium based electroplating process provides excellent adhesion to organic coatings such as lacquers and thermoplastic coating layers. The material according to the invention can be used to replace ECCS for the same applications, as they have similar product features. Starting at a thickness of the Cr-CrOx coating of ≥ 20 mg Cr/m² already results in a significant improvement in comparison to the samples without a Cr-CrOx coating and that starting at a thickness of about 60 mg Cr/m² the performance is already identical to that of currently marketed products which are produced using Cr(VI)-based solutions.

In an embodiment of the invention the composition of the electrolyte used for the Cr-CrOx deposition was: 120 g/l basic chromium sulphate, 250 g/l potassium chloride, 15 g/l potassium bromide and 51 g/l potassium formate. The pH was adjusted to values between 2.3 and 2.8 measured at 25 °C by the addition of sulphuric acid.

Surprisingly, it was found that it is possible to electro-deposit a chromium metal - chromium oxide coating layer from this electrolyte in a single process step. From prior art, it follows that addition of a buffering agent to the electrolyte, like e.g. boric acid, is considered required to enable the electro-deposition of chromium metal to take place. In addition, it has been reported that it is not possible to deposit chromium metal and chromium oxide from the same electrolyte, due to this buffering effect (with a buffering agent being required for the electro-deposition of the chromium metal but excludes the formation of chromium oxides and *vice versa*). However, it was found that no such addition of a buffering agent was required to deposit chromium metal, provided that a sufficiently high cathodic current density is being applied.

Concerning the electro-deposition process of Cr-CrOx coatings from trivalent chromium based electrolytes, it is important to prevent/minimise the oxidation of trivalent chromium to its hexavalent state at the anode. Suitable anode materials consist of graphite, platinised titanium and titanium provided with a mixed metal oxide coating containing iridium oxide and tantalum oxide. In a preferred embodiment the anode consists of a platinised titanium anode.

According to a second aspect, the invention is also embodied in a temper rolled or stretcher levelled polymer-coated steel substrate for packaging applications with improved environmental stress cracking resistance, wherein the polymer-coated substrate has been provided with a polymer coating layer on one or both sides of said substrate and wherein the polymer-coated steel substrate was passed material through a temper mill and applying a thickness reduction between 0 - 3%, preferably of at least 0.2% or passed through a stretcher-leveller.

According to a third aspect, the invention is also embodied in the use of the material produced according to the invention or of the polymer-coated steel substrate for packaging applications with improved environmental stress cracking resistance for the production of a can or container for packaging a product, preferably a food product, a beverage or a pet food product or beverage, or for the packaging of aerosols or general line such as paint.

The environmental stress cracking typically occurs where the reduction of the substrate during forming of the can is small. High deformations do not result in Lüders' lines and therefore the environmental stress cracking also does not occur. At low deformations, such as in the dome of the aerosol or beverage can the reductions are small and may lead to the formation of Lüders' Lines. It is believed that the discontinuous yielding of the steel substrate results in elastic rather than plastic deformation of the polymer coating which in turn cause the increased susceptibility for environmental stress cracking. By the temper rolling or stretcher levelling these elastic stresses in the polymer layer are avoided because the discontinuous yielding behaviour of the substrate does not occur.

Preferred embodiments are provided in the independent claims. Preferred processing conditions are explained hereinabove where the process claims are elucidated. The invention is now further explained by means of the following, non-limiting examples and figures.
Figure 1 shows a stress-strain curve of PET-coated standard steel substrate and
Figure 2 shows the same after subjecting the PET-coated standard steel substrate to a temper rolling reduction of 1%. Figure 3 shows a stress-strain curve of a steel substrate after being exposed to two sequential heat treatments simulating diffusion-annealing and thermal lamination and Figure 4 shows the same after a temper rolling reduction of 1%.

### Example 1 - Thermal lamination heat treatment

A PET film was applied by thermal lamination to a standard packaging steel substrate (TH340, continuous annealed SR low carbon steel) provided with a standard ECCS metal coating. These flat sheet polymer-coated materials were subsequently deformed either by Erichsen cupping or putting the material through a Gardner falling dart impact test. Some of the sheets were fed to a laboratory temper mill, reducing the material thickness by 1%, prior to applying the aforementioned deformation.

For the polymer-steel laminates that did not receive a temper mill reduction, after deformation no cracking of the coating was observed visually, even at fairly large deformations as in a 6 mm Erichsen cup. When these deformed samples were left exposed to air, a minor amount of stress cracking did develop over a period of days. When these samples were exposed to a lubricant or wax, stress cracks developed within minutes and continued to grow for several hours. When these samples were exposed to ethanol, extensive stress cracking was observed immediately which did not develop further in time. Thus, the observed behaviour was a true environmental stress cracking (ESC) phenomenon arising from a combination of mechanical stress and contact with chemicals, where certain chemicals are much more aggressive than others.

During the experiments it was noted that deformation in an Erichsen cup is not homogeneous but shows Lüders' lines, in particular in freely deforming areas not supported by the indenter. Stress cracking of the coating developed predominantly in those areas.

It was found that samples that had received a temper mill reduction of 1% prior to deformation did not develop Lüders' lines during Erichsen cupping and showed no signs of environmental stress cracking after exposure to ethanol.

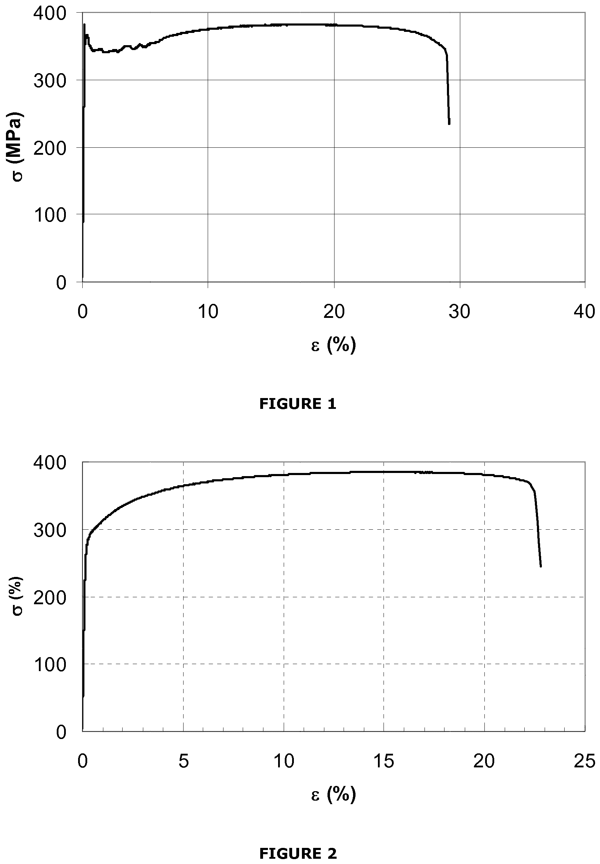

The stress-strain curves of the PET-coated steel sheets with and without the temper mill treatment are shown in Figures 1 and 2. These Figures clearly show that yield point elongation is effectively suppressed by the stretching operation, which underpins the observation that no formation of Lüders' lines was found for the specimens that received the 1% reduction.

These results demonstrate that ESC of PET-coated steel can be suppressed and/or eliminated provided that the material is substantially free from yield point elongation. This first example focuses on counteracting the effects of material ageing due to a thermal treatment associated with applying a PET film by thermal lamination. However, the inventors found that it is also possible to counteract the material ageing effects of successive heat treatments to which the steel substrate can become exposed during the consecutive application of coating processes, as demonstrated in example 2.

### Example 2 - Diffusion annealing heat treatment

A standard packaging tinplate steel substrate (TH340, continuous annealed low carbon steel, C=0.045%) was exposed to two heat treatments: 1. a diffusion-annealing heat treatment and 2. a thermal lamination heat treatment

During diffusion-annealing of the tinplate for forming an FeSn-layer, the sample was heated to a temperature of 600°C, applying a heating rate of 100°C/s, kept at 600°C for 2 seconds, cooled back to room temperature by blowing nitrogen gas, applying a cooling rate of 100°C/s followed by standard thermal lamination of a PET film, including pre-heating the steel to a temperature of 220°C to achieve thermal sealing/bonding of the PET film, followed by post-heating the substrate to a temperature exceeding 250°C (above the melting temperature of PET) to modify the properties of the film.

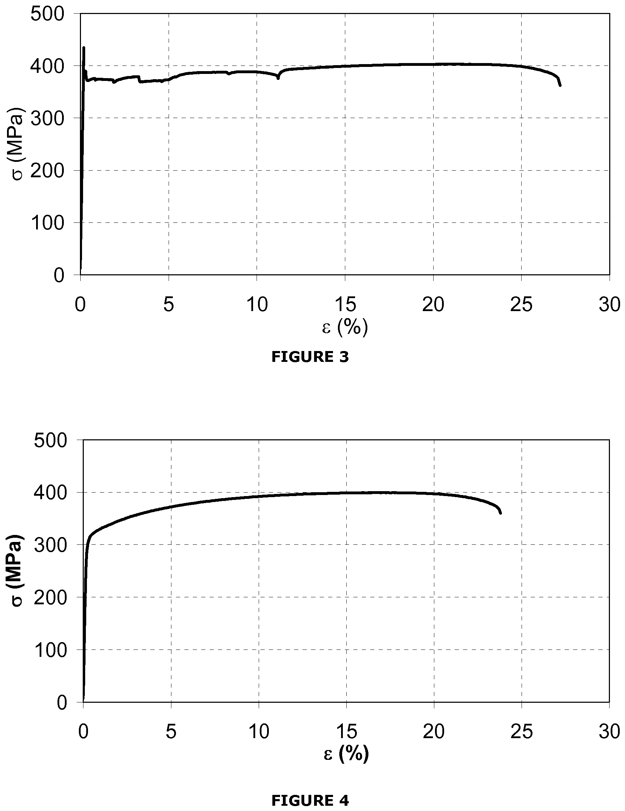

Some of the sheets were temper rolled which reduced the material thickness by 1%. Stress-strain curves were obtained from samples with (figure 3) and without (figure 4) being exposed to the temper rolling treatment. The results clearly demonstrate that it is possible to successfully counteract the effects of material ageing caused by exposing the bulk steel substrate to the successive thermal treatments associated with diffusion-annealing and thermal lamination. The results in relation to ESC were similar to the samples of Example 1.

For ELC and ULC steels which are susceptible to ageing similar results are to be expected.

## Claims

1. A process for manufacturing a polymer-coated steel substrate for packaging applications with improved environmental stress cracking resistance, comprising the subsequent steps of:
• producing a polymer-coated substrate with a polymer coating layer on one or both sides of said substrate;
• subjecting the polymer-coated substrate to a stretching operation wherein the stretching operation is achieved by:
a. passing the material through a temper mill and applying a thickness reduction between 0 - 3%, preferably of at least 0.2%; or by
b. passing the material through a stretcher-leveller.

2. Process according to claim 1 wherein the polymer coating layer on one or both sides of the substrate is provided onto the substrate by film lamination, cast-film lamination or direct extrusion.

3. Process according to claim 1 or 2 wherein the polymer coating layer on the one or both sides of the substrate consists of a thermoplastic single- or multilayer polymer coating, preferably wherein the thermoplastic single- or multilayer polymer coating layer or layers is a polymer coating comprising one or more layers comprising thermoplastic resins such as polyesters or polyolefins, acrylic resins, polyamides, polyvinyl chloride, fluorocarbon resins, polycarbonates, styrene type resins, ABS resins, chlorinated polyethers, ionomers, urethane resins and functionalised polymers; and/or copolymers thereof; and or blends thereof.

4. Process according to any one of the preceding claims wherein the polymer coating layer comprises poly(ethylene terephthalate) (PET) or poly(butylene terephthalate) (PBT), or PET and PBT in the form of a mixture, blend or copolymer.

5. Process according to any one of the preceding claims wherein the steel substrate consists of tinplate, blackplate or ECCS.

6. Process according to any one of the preceding claims wherein the steel substrate is provided with a Cr-CrOx coating layer prior to application of the polymer coating.

7. Process according to claim 6 wherein the Cr-CrOx-layer is deposited in one plating step from a plating solution comprising a mixture of a trivalent chromium compound, a chelating agent, an optional conductivity enhancing salt, an optional depolarizer, an optional surfactant and to which an acid or base can be added to adjust the pH.

8. Process according to claim 7 wherein the chelating agent comprises a formic acid anion, the conductivity enhancing salt contains an alkali metal cation and the depolarizer comprises a bromide containing salt, preferably wherein the cationic species in the chelating agent, the conductivity enhancing salt and the depolarizer is potassium.

9. Temper rolled or stretcher levelled polymer-coated steel substrate for packaging applications with improved environmental stress cracking resistance, wherein the polymer-coated substrate has been provided with a polymer coating layer on one or both sides of said substrate and wherein the polymer-coated steel substrate was passed material through a temper mill and applying a thickness reduction between 0 - 3%, preferably of at least 0.2%; or passed through a stretcher-leveller.

10. Temper rolled or stretcher levelled polymer-coated steel substrate for packaging applications according to claim 9 produced according to any one of claims 2 to 8

11. Use of the material produced according to any one of claims 1 to 8 or the material according to claim 9 or 10 for the production of a can or container for packaging a product, preferably a food product, a beverage or a pet food product or beverage.

12. Use of the material produced according to any one of claims 1 to 8 or the material according to claim 9 or 10 for the production of an aerosol can or aerosol container.

## Patentansprüche

1. Verfahren zum Herstellen eines polymerbeschichteten Stahlsubstrates für Verpackungsanwendungen mit verbessertem Widerstand gegen umgebungsbedingte Spannrissbildung, wobei das Verfahren die folgenden Schritte umfasst:
• Herstellen eines polymerbeschichteten Substrates mit einem Polymerfilm auf einer oder beiden Seiten des Substrates;
• Unterziehen des polymerbeschichteten Substrates einem Streckvorgang, wobei der Streckvorgang durch Folgendes erzielt wird:
a. Leiten des Materials durch ein Nachwalzwerk und Anwenden einer Dickenreduktion zwischen 0 - 3 %, vorzugsweise zumindest 0,2 %; oder
b. Leiten des Materials durch eine Streckrichteinrichtung.

2. Verfahren nach Anspruch 1, wobei der Polymerfilm auf einer oder beiden Seiten des Substrates durch Filmlaminierung, Gießfilmlaminierung oder direktes Extrudieren auf das Substrat bereitgestellt wird.

3. Verfahren nach Anspruch 1 oder 2, wobei der Polymerfilm auf der einen oder auf beiden Seiten des Substrates aus einem thermoplastischen einzel- oder mehrschichtigen Polymerfilm besteht, wobei der oder die thermoplastischen einzel- oder mehrschichtigen Polymerfilm oder Films vorzugsweise eine Polymerschicht mit einer oder mehreren Schichten ist, die thermoplastische Harze wie Polyester oder Polyolefine, Acrylharze, Polyamide, Polyvinylchlorid, Fluorcarbonharze, Polycarbonate, Styrol-Typ-Harze, ABS-Harze, gechlorte Polyether, Ionomere, Urethanharze und funktionalisierte Polymere; und/oder Copolymere davon; und/oder Mischungen davon umfasst.

4. Verfahren nach einem der vorangehenden Ansprüche, wobei der Polymerfilm (ethylenterephthalat) (PET) oder Poly(butylenterephthalat) (PBT) oder PET und PBT in Form eines Gemischs, einer Mischung oder eines Copolymers umfasst.

5. Verfahren nach einem der vorangehenden Ansprüche, wobei das Stahlsubstrat aus Weißblech, Schwarzblech oder ECCS besteht.

6. Verfahren nach einem der vorangehenden Ansprüche, wobei das Stahlsubstrat vor dem Auftragen der Polymerbeschichtung mit einem Cr-CrOx-beschichteten Mantel bereitgestellt wird.

7. Verfahren nach Anspruch 6, wobei der Cr-CrOx-Mantel in einem Plattierungsschritt durch eine Plattierungslösung angelagert wird, die ein Gemisch aus einer dreiwertigen Chromverbindung, einen Chelatbildner, ein optionales die Leitfähigkeit verbesserndes Salz, einen optionalen Depolarisator, ein optionales Tensid umfasst und dem eine Säure oder eine Base zugegeben werden kann, um den pH-Wert anzupassen.

8. Verfahren nach Anspruch 7, wobei der Chelatbildner ein Ameisensäureanion umfasst, das die Leitfähigkeit verbessernde Salz ein Alkalimetallkation enthält und der Depolarisator ein bromidhaltiges Salz umfasst, wobei die kationische Spezies in dem Chelatbildner, dem die Leitfähigkeit verbessernden Salz und dem Depolarisator vorzugsweise Kalium ist.

9. Nachgewalztes oder durch eine Streckrichteinrichtung gedehntes polymerbeschichtetes Stahlsubstrat für Verpackungsanwendungen mit verbessertem Widerstand gegen umgebungsbedingte Spannrissbildung, wobei das polymerbeschichtete Substrat auf einer oder beiden Seiten des Substrates mit einem Polymerfilm bereitgestellt wurde und wobei das polymerbeschichtete Stahlsubstrat durch ein Nachwalzwerk und Anwenden einer Dickenreduktion zwischen 0 - 3 %, vorzugsweise von zumindest 0,2 % geleitet wird; oder durch eine Streckrichteinrichtung geleitet wird.

10. Nachgewalztes oder durch eine Streckrichteinrichtung gedehntes polymerbeschichtetes Stahlsubstrat für Verpackungsanwendungen nach Anspruch 9, das nach einem der Ansprüche 2 bis 8 hergestellt wurde.

11. Verwendung des nach einem der Ansprüche 1 bis 8 hergestellten Materials oder des Materials nach Anspruch 9 oder 10 für die Herstellung einer Dose oder eines Behälters zur Verpackung eines Produktes, vorzugsweise eines Nahrungsmittelproduktes, eines Getränkes oder eines Haustiernahrungsmittelproduktes oder -getränkes.

12. Verwendung des nach einem der Ansprüche 1 bis 8 hergestellten Materials oder des Materials nach Anspruch 9 oder 10 für die Herstellung einer Aerosol-Dose oder eines Aerosol-Behälters.

## Revendications

1. Procédé de fabrication d'un substrat d'acier à revêtement polymère destiné à des applications d'emballage présentant une résistance améliorée à la fissuration sous contrainte environnementale, comprenant les étapes ultérieures de :
• production d'un substrat à revêtement polymère présentant une couche de revêtement polymère sur une ou les deux faces dudit substrat ;
• soumission du substrat à revêtement polymère à une opération d'étirage, dans lequel l'opération d'étirage est obtenue par :
a. passage du matériau dans un laminoir de finissage et application d'une réduction d'épaisseur entre 0 à 3 %, de préférence d'au moins 0,2 % ; ou par
b. passage du matériau dans un banc de planage par étirage.

2. Procédé selon la revendication 1, dans lequel la couche de revêtement polymère sur une ou les deux faces du substrat est fournie sur le substrat par lamination d'un film, lamination d'un film coulé ou extrusion directe.

3. Procédé selon la revendication 1 ou 2, dans lequel la couche de revêtement polymère sur l'une ou les deux faces du substrat est constituée d'un revêtement polymère thermoplastique mono ou multicouches, de préférence dans lequel la couche ou les couches de revêtement polymère thermoplastique mono ou multicouches est un revêtement polymère comprenant une ou plusieurs couches comprenant des résines thermoplastiques telles que des polyesters ou polyoléfines, résines acryliques, polyamides, polychlorure de vinyle, résines fluorocarbonées, polycarbonates, résines de type styrène, résines ABS, polyéthers chlorés, ionomères, résines d'uréthane et polymères fonctionnalisés ; et/ou des copolymères de ceux-ci ; et/ou des mélanges de ceux-ci.

4. Procédé selon l'une quelconque des revendications précédentes, dans lequel la couche de revêtement polymère comprend du téréphtalate de polyéthylène (PET) ou du téréphtalate de polybuthylène (PBT) ou PET et PBT sous la forme d'une mixture, un mélange ou un copolymère.

5. Procédé selon l'une quelconque des revendications précédentes, dans lequel le substrat d'acier est constitué de fer-blanc, fer noir ou ECCS.

6. Procédé selon l'une quelconque des revendications précédentes, dans lequel le substrat d'acier est pourvu d'une couche de revêtement Cr-CrOx avant application du revêtement polymère.

7. Procédé selon la revendication 6, dans lequel la couche Cr-CrOx-est déposée en une étape de placage à partir d'une solution de placage comprenant une mixture d'un composé de chrome trivalent, un agent chélatant, un sel augmentant la conductivité optionnel, un dépolarisant optionnel, un tensio-actif optionnel et auquel un acide ou une base peut être ajouté pour ajuster le pH.

8. Procédé selon la revendication 7, dans lequel l'agent chélatant comprend un anion d'acide formique, le sel augmentant la conductivité contient un cation de métal alcalin et le dépolarisant comprend un sel contenant du bromure, de préférence dans lequel l'espèce cationique dans l'agent chélatant, le sel augmentant la conductivité et le dépolarisant est le potassium.

9. Substrat d'acier à revêtement polymère laminé à froid ou dressé par étirage destiné à des applications d'emballage présentant une résistance améliorée à la fissuration sous contrainte environnementale, dans lequel le substrat à revêtement polymère a été pourvu d'une couche de revêtement polymère sur une ou les deux faces dudit substrat et dans lequel le substrat d'acier à revêtement polymère a été obtenu par passage du matériau dans un laminoir de finissage et application d'une réduction d'épaisseur entre 0 à 3 %, de préférence d'au moins 0,2 % ; ou passage dans un banc de planage par étirage.

10. Substrat d'acier à revêtement polymère laminé à froid ou dressé par étirage destiné à des applications d'emballage selon la revendication 9 produit selon l'une quelconque des revendications 2 à 8.

11. Utilisation du matériau produit selon l'une quelconque des revendications 1 à 8 ou matériau selon la revendication 9 ou 10 destiné à la production d'une boîte métallique ou d'un contenant destiné à emballer un produit, de préférence un produit alimentaire, une boisson ou un produit alimentaire ou boisson pour animal de compagnie.

12. Utilisation du matériau produit selon l'une quelconque des revendications 1 à 8 ou matériau selon la revendication 9 ou 10 destiné à la production d'une boîte métallique aérosol ou d'un contenant aérosol.
